# EUROPÄISCHE PATENTSCHRIFT

(11) **EP 0 790 462 B1**
(45) Veröffentlichungstag und Bekanntmachung des Hinweises auf die Patenterteilung: **23.05.2001**
(21) Anmeldenummer: 97810048.5
(22) Anmeldetag: 31.01.1997
(51) Int. Cl.: F23D 11/38, F23D 11/44, F16K 23/00

(54) **Düsenstock für einen Öldruckzerstäubungsbrenner sowie Abschlussventil für einen solchen Düsenstock**
Nozzle connection for a pressurised oil atomisation burner and shut valve for such nozzle connection
Raccord de buse pour un brûleur à pulvérisation de fuel sous pression et vanne d'arrêt pour un tel raccord de buse

(30) Priorität: 16.02.1996 CH 40596
(43) Veröffentlichungstag der Anmeldung: 20.08.1997
(60) Teilanmeldung: 00101727.6
(73) Patentinhaber: SATRONIC AG, 8157 Dielsdorf (CH)
(72) Erfinder: Lüscher, Michel, 8309 Breite-Nürensdorf (CH)
(74) Vertreter: Sturm, Christoph

(56) Entgegenhaltungen:
- EP-A- 0 566 855
- DE-A- 3 142 074
- DE-A- 3 226 023
- FR-A- 1 502 672
- US-A- 4 660 598

## Beschreibung

### TECHNISCHES GEBIET

Die vorliegende Erfindung bezieht sich auf das Gebiet der Brennertechnik. Sie betrifft einen Düsenstock für einen Oeldruckzerstäubungsbrenner, welcher Düsenstock an seinem einen Ende einen Düsenraum zur Aufnahme einer Druckzerstäuberdüse und an seinem anderen Ende ein Anschlussteil zum Anschluss einer Oelzuführungsleitung aufweist, und welcher Düsenstock ein zwischen dem Anschlussteil und dem Düsenraum angeordnetes Abschlussventil zum Unterbrechen des Oelflusses bei nicht gezündetem Brenner umfasst. Sie betrifft weiterhin ein Abschlussventil für einen solchen Düsenstock.

Ein Düsenstock der eingangs genannten Art ist z.B. aus der Druckschrift DE-A1-42 15 995 bekannt.

### STAND DER TECHNIK

Bei Oeldruckzerstäubungsbrennern, wie sie beispielsweise für Oelheizungen in Häusern zum Einsatz kommen, wird das zu verbrennende Oel mittels eine Pumpe mit einem Druck von mehreren bar durch eine Druckzerstäuberdüse gepresst, dort zu feinen Tröpfchen zerstäubt, mit eingeblasener Luft vermischt und in einer Flamme verbrannt. Die Flamme wird durch einen geeigneten Zündmechanismus gezündet und brennt anschliessend selbständig und stabil, solange Verbrennungsluft und Oel in ausreichendem Masse und unter den erforderlichen Bedingungen (Druck, Strömungsgeschwindigkeit etc.) zugeführt werden.

Bei derartigen Oeldruckzerstäubungsbrennern kann es, wenn keine besonderen Vorkehrungen getroffen werden, beim Abschalten des Brenners zu einem strahlartigen Austreten von Oel aus der Druckzerstäuberdüse kommen. Ein solches "Nachtröpfeln" führt in der Abstellphase und in der anschliessenden Startphase zu einem Ueberschuss an Heizöl im Brennraum, der sich in Form von unverbrannten Kohlenwasserstoffen im Abgas bemerkbar macht und die Emissionswerte der Heizanlage erheblich verschlechtert. Dieselben unerwünschten Auswirkungen ergeben sich, wenn infolge der Erwärmung des in der Zuleitung zur Düse bzw. im Düsenstock stehenden Oeles, insbesondere wenn der Düsenstock als Oelvorwärmer ausgebildet ist, eine Volumenausdehnung erfolgt. Die Volumenausdehnung führt zu einem Druckaufbau in der Leitung und zu einer Abgabe von Oel aus der Düsenöffnung.

Es ist daher in der Vergangenheit vielfach vorgeschlagen worden, zur Verhinderung des "Nachtröpfelns" oder eines sonstigen Austretens von Oel ausserhalb der eigentlichen Betriebsphase des Brenners nahe an der Düse in der Zuleitung ein Abschlussventil anzuordnen, welches das unerwünschte Austreten von Oel, aus der Düse weitgehend verhindert. Um den schädlichen Raum zwischen dem Abschlussventil und der eigentlichen Düse und damit das nicht kontrollierbare Oelvolumen in der Zuleitung möglichst klein zu halten, ist das Abschlussventil dabei überwiegend als integrierter Teil des mit einem Filter versehenen Düseneinsatzes ausgebildet, der in den Düsenstock einschraubbar ist und bei Bedarf ausgetauscht werden kann. So ist in der DE-A1-33 08 153 der Anmelderin beispielsweise eine (einschraubbare) Druckzerstäuberdüse offenbart, bei der zwischen dem Filter (4) und der eigentlichen Austrittsöffnung (10) ein selbsttätig schaltendes Abschlussbzw. Absperrventil (21) angeordnet ist. In diesem Absperrventil wird ein Verschlusskörper (22) in Form einer Kugel mittels einer membranartigen Springfeder (24) dichtend gegen eine Ventilfläche (23) gedrückt. Das Ventil öffnet nur dann, wenn Oel mit einem ausreichend grossen Druck am Ventil ansteht.

Aus der DE-C1-39 01 032 ist eine Druckzerstäuberdüse mit integriertem Abschlussventil bekannt, bei welchem anstelle der Springfeder eine Spiralfeder eingesetzt ist. Der dadurch erreichbare längere Ventilweg wird eingesetzt, um das Nachtropfverhalten der Düse weiter zu verbessern.

Aus der EP-A1-0 566 855 der Anmelderin ist eine Druckzerstäuberdüse mit integriertem Abschlussventil bekannt, bei dem mittels einer spiralförmigen Druckfeder über einen Schliesskolben eine Membran dichtend gegen einen Ventilsitz gedrückt wird. Eine andere Lösung, wie sie in der DE-A1-33 20 270 offenbart ist, verwendet anstelle der Membran eine Ventilplatte. Eine weitere Lösung, wie sie in der DE-C2-38 00 300 beschrieben ist, verwendet ein federbelastetes Ventilelement, welches unter Zwischenschaltung eines O-Ringes auf einer Dichtfläche ruht.

Bei allen diesen Lösungen ist das Abschluss- bzw. Absperrventil integrierter Bestandteil des einschraub- und auswechselbaren Düseneinsatzes. Vorteilhaft ist dabei, dass das Abschlussventil sehr nahe an der eigentlichen Düse plaziert ist und daher das unerwünschte Austreten von Oel auf ein Minimum reduziert ist. Nachteilig ist jedoch, dass das Ventil Teil des Düseneinsatzes ist und daher zusammen mit dem Düseneinsatz ein- und ausgebaut wird. Im Zuge der Normierung sind nämlich durch die Europäische Norm EN 293, die in etwa der älteren Deutschen Norm DIN 4790 entspricht, für den einschraubbaren Düseneinsatz äussere Masse festgelegt worden (Bild 1 der DIN EN 293), die gewährleisten sollen, dass in den vorhandenen Düsenstock eines Oelbrenners Druckzerstäuberdüsen unterschiedlicher Hersteller problemlos eingebaut werden können.

Da nun sowohl Düseneinsätze mit integrierten Abschlussventil als auch Düseneinsätze ohne integriertes Abschlussventil auf dem Markt angeboten werden, kann es unter Umständen passieren, dass ein fertig montierter Düsenstock überhaupt kein Abschlussventil aufweist, weil ein Düseneinsatz ohne integriertes Abschlussventil eingebaut worden ist, oder dass das integrierte Abschlussventil in seiner Schaltcharakteristik nicht zu der sonstigen Auslegung des jeweiligen Brenners passt. Es ist daher wünschenswert, einen Düsenstock bereitzustellen, der unabhängig vom ausgewählten Düseneinsatz ein geeignetes Absperrventil enthält.

In der eingangs genannten DE-A1-42 15 995 ist nun bereits ein als Vorwärmer ausgelegter Düsenstock für Oeldruckzerstäubungsbrenner vorgeschlagen worden, bei dem zwischen dem Ausgang der (elektrisch betriebenen) Heizung und dem Einbauraum für den Düseneinsatz ein fest im Düsenstock montiertes Magnetventil angeordnet ist, welches als Absperrventil ausserhalb des eigentlichen Brennerbetriebes die Oelzufuhr zur Düse unterbricht und damit ein Vor- und Nachtropfen des Oeles aus der Düse verhindert. In diesen bekannten Düsenstock können daher wahlweise Düseneinsätze mit und ohne integriertes Abschlussventil eingeschraubt werden, ohne dass sich hinsichtlich des Vor- und Nachtropfens wesentliche Unterschiede ergeben.

Der bekannte Düsenstock hat jedoch eine Reihe von Nachteilen:
- Das Magnetventil ist von seiner Bauart her fast halb so lang wie der gesamte Heizungsteil. Dies hat zur Folge, dass entweder der Düsenstock eine erheblich grössere Gesamtlänge aufweist als die üblichen Düsenstöcke, oder dass der Einbauraum für den Düseneinsatz gegenüber der Norm EN 293 wesentlich verkürzt ist., so dass normgerechte Düseneinsätze mit angebautem Filter gar nicht eingebaut werden können. Es ist dann notwendig, wie dies in der Figur der DE-A1-42 15 995 gezeigt ist, ein separates Filter am Eingang des Vorwärmers vorzusehen.
- Bedingt durch die grosse Länge des Magnetventils sind spezielle Massnahmen erforderlich, um die von der Heizung ausgehende Wärme bis zur Düse zu leiten. Dazu muss eine spezielle Hülse (48) aus gut wärmeleitendem Kupfer vorgesehen werden, die das Magnetventil thermisch überbrückt.
- Um eine wirksame Arbeitsweise des Magnetventils zu gewährleisten, muss der magnetische Kreis möglichst weitgehend geschlossen sein. Dazu wird das Aussenrohr des Düsenstocks aus einem ferromagnetischen Material gewählt, was die Materialauswahl erheblich einschränkt.
- Der Einbau der Magnetspule des Magnetventils und der elektrischen Zuführungen beansprucht nicht nur zusätzlichen Platz im Düsenstock, sondern erfordert auch einen erheblichen Montageaufwand. Dies gilt auch für ein etwaiges Auswechseln des Ventils.
- Die Ansteuerung des Magnetventils in Koordination mit dem jeweiligen Betriebszustand des Brenners erfordert einen zusätzlichen Aufwand an Mess- und Steuerelektronik und eine genaue Abstimmung der Steuerungsparameter.

Ein weiterer Düsenstock nach dem Stand der Technik ist aus DE-A-32 26 023 bekannt.

### DARSTELLUNG DER ERFINDUNG

Es ist daher Aufgabe der Erfindung, einen Düsenstock zu schaffen, der bei praktisch gleichbleibender Länge unabhängig von dem eingebauten Düseneinsatz ein Vor- und Nachtropfen des Oels sicher verhindert, den Einbau beliebiger normgerechter Düseneinsätze zulässt, einfach aufgebaut und leicht zu montieren und zu warten ist, sowie ein Abschlussventil für einen solchen Düsenstock vorzuschlagen.

Die Aufgabe wird durch einen Düsenstock mit den Merkmalen des Anspruchs 1 gelöst.

Weitere Ausführungsformen des erfindungsgemässen Düsenstockes ergeben sich aus den abhängigen Ansprüchen.

Das erfindungsgemässe Abschlussventil für den Düsenstock nach der Erfindung ist durch die Merkmale des Anspruchs 7 gekennzeichnet.

### KURZE BESCHREIBUNG DER ZEICHNUNGEN

Die Erfindung soll nachfolgend anhand von Ausführungsbeispielen im Zusammenhang mit der Zeichnung näher erläutert werden. Es zeigen
- Fig. 1: im Längsschnitt ein bevorzugtes Ausführungsbeispiel eines Düsenstockes nach der Erfindung mit eingeschraubtem Düseneinsatz und einem am Ausgang der Heizung angeordneten Abschlussventil;
- Fig. 2: im vergrösserten Längsschnitt den Aufbau des Abschlussventils aus Fig. 1;
- Fig. 3: im Längsschnitt einen Ausschnitt aus einem zu Fig. 1 vergleichbaren Düsenstock mit verlängertem Abschlussventil; und
- Fig. 4: im vergrösserten Längsschnitt den Aufbau des Abschlussventils aus Fig. 3.

### WEGE ZUR AUSFÜHRUNG DER ERFINDUNG

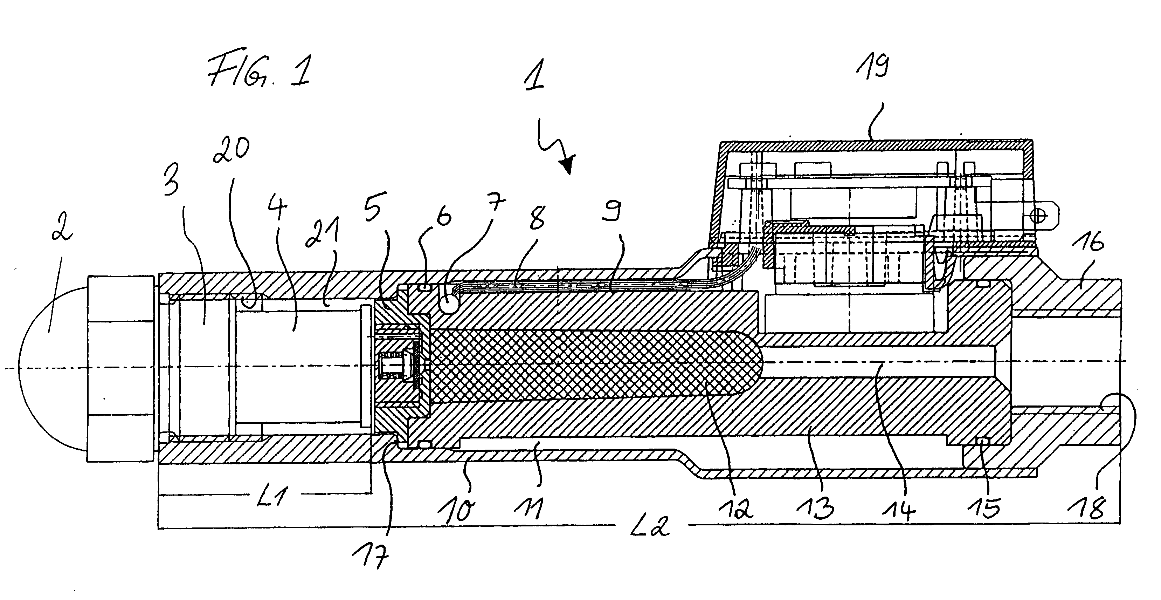

In Fig. 1 ist im Längsschnitt ein bevorzugtes Ausführungsbeispiel eines Düsenstockes nach der Erfindung mit eingeschraubtem Düseneinsatz und einem am Ausgang der Heizung angeordneten Abschlussventil wiedergegeben. Der Düsenstock 1 umfasst ein längliches zylindrisches Rohr 10, welches am einen Ende einen mit einem Innengewinde 20 versehenen Düsenraum zum Einbau einer Druckzerstäuberdüse 2 aufweist. Die Druckzerstäuberdüse 2 ist dabei in an sich bekannter Weise als in seinen Massen genormter einschraubbarer Düseneinsatz ausgebildet und hat zu diesem Zweck ein entsprechendes Aussengewinde 3. Teil des Düseneinsatzes ist ein Filter 4, beispielsweise ein Sinterfilter. Gemäss der eingangs erwähnten Euronorm EN 293 ragt der Düseneinsatz mit einer Länge L1 von maximal 20,5 mm in den Düsenraum 21 hinein, wobei das Filter 4 einen maximalen Durchmesser von 11,8 mm aufweist.

Am anderen Ende des Düsenstockes 1 ist in das Rohr 10 ein mit einer Gewindebohrung 18 ausgestattetes Anschlussteil 16 eingepasst, an welches eine (nicht dargestellte) Oelzuführungsleitung angeschlossen werden kann, wie dies z.B. in der DE-C2-38 00 300 beschrieben ist. Hauptbestandteil des Düsenstockes 1 ist eine innerhalb des Rohres 10 angeordnete (zylindrische) Heizung 13 zum Vorwärmen des Oeles, die sich mit ihrem einen Ende an einem Durchmesserabsatz im Anschlussteil 16 abstützt. Am anderen Ende der Heizung 13 ist ein kompaktes selbsttätiges Abschlussventil 5 eingesetzt, das weiter unten im Zusammenhang mit der Fig. 2 noch näher beschrieben werden soll.

Abschlussventil 5 und Heizung 13 sind durch abgestufte Durchmesser so aneinander angepasst, dass sie öldicht miteinander verbunden werden können. Beim Zusammenbau des Düsenstockes werden beide zusammen mit dem aufgesetzten Anschlussteil 16 von rechts in das Rohr 10 des Düsenstockes 1 eingeschoben, bis sich eine aussen umlaufende Schulter (37 in Fig. 2) am Abschlussventil 5 an einem entsprechenden Absatz 17 im Rohr 10 abstützt. Das Anschlussteil 16 wird dann im Rohr durch Punktschweissen oder dgl. fixiert, so dass Rohr 10, Heizung 13, Ventil 5 und Anschlussteil 16 eine feste Einheit bilden. Zwischen den beiden Enden ist die Heizung 13 im Aussendurchmesser reduziert, so dass sich in diesem Bereich zwischen der Heizung 13 und dem Rohr 10 ein Ringspalt 11 ergibt, der an beiden Enden der Heizung 13 durch entsprechende O-Ringe 6 und 15 gegen die mit Oel beaufschlagten Räume 18 bzw. 21 im Düsenstock 1 abgedichtet ist.

Die Heizung 13 weist eine zentrale Durchgangsbohrung 14 zur Führung des zu wärmenden Oeles auf, die am einen Ende mit der Gewindebohrung 18 im Anschlussteil 16 in Verbindung steht, und sich zur Druckzerstäuberdüse 2 hin erweitert, um einen vom Oel durchströmten Wärmetauscher 12 aufzunehmen, der mit einer möglichst grossen Oberfläche einen guten Wärmeübergang zwischen der warmen Heizung 13 und dem durchströmenden Oel sicherstellt. Der Wärmetauscher 12 kann z.B. als Sinterkörper aus einer Vielzahl von metallischen Kügelchen hergestellt sein. Es sind aber auch andere Wärmetauscher mit parallelen Kanälen denkbar, wie sie z.B. aus der DE-A1-42 15 995 oder der DE-A1-42 16 008 bekannt sind. Das Aufheizen der Heizung 13 erfolgt beispielsweise über eine im Bereich des Ringspaltes 11 auf den Körper der Heizung 13 aussen aufgebrachte Heizwicklung 9. Andere Heizelemente sind aber auch denkbar. Zur Regelung der Heizleistung ist in einer Ausnehmung im Körper der Heizung 13 ein Temperaturfühler 7 angebracht. Die Zuleitungen 8 zum Temperaturfühler 7 und zur Heizwicklung 9 sind im Ringspalt 11 zu einem seitlich aussen am Düsenstock 1 angebrachten Anschlusskasten 19 mit geeigneten Anschlusskontakten geführt, auf die hier nicht näher eingegangen werden soll. Es ist durchaus auch denkbar, auf den Temperaturfühler 7 zu verzichten und statt dessen eine ungeregelte Heizung einzusetzen.

Die Gesamtlänge L2 des beispielhaften Düsenstockes 1 aus Fig. 1 beträgt nicht mehr als etwa 90 mm, obgleich im Düsenraum 21 die volle Einbaulänge L1 der Euronorm EN 293 zur Verfügung steht. Dieser platzsparende Aufbau ist vor allem dem extrem kompakten Aufbau des Abschlussventils 5 zu verdanken, das im dargestellten Ausführungsbeispiel in axialer Richtung eine Dicke von nur 5,3 mm und einen maximalen Aussendurchmesser im Bereich der umlaufenden Schulter (37 in Fig. 2) von 14,7 mm aufweist. Der innere Aufbau des Abschlussventils 5 ist aus der vergrösserten Längsschnittdarstellung in Fig. 2 ersichtlich.

Das Abschlussventil 5 ist in einem (zur Achse rotationssymmetrischen) Ventilgehäuse 22 untergebracht, welches auf der einen Seite eine zentrale Einlassbohrung 27 für das Oel aufweist, die sich konisch erweitert und in den Boden eines koaxialen Gewindesackloches 35 mündet, welches von der anderen Seite in das Ventilgehäuse 22 eingelassen ist. Im Boden des Geweindesackloches 35 sind weiterhin zwei Ringnuten 26 und 25 angeordnet, die untereinander durch eine in radialer Richtung verlaufende Verbindungsnut 36 verbunden sind und die Einlassbohrung 27 konzentrisch umgeben. Zwischen der konischen Erweiterung der Einlassbohrung 27 und der (inneren) ersten Ringnut 26 ist ein ringförmiger Ventilsitz 29 gebildet, gegen den bei geschlossenem Ventil eine elastische Membran 28, die beispielsweise aus einem ölfesten Gummi besteht, dichtend gedrückt wird. Gerade der Aufbau des Ventils aus federbelasteter Membran und Ventilsitz mit seitlichem Durchgang für das Oel schafft einen extrem kompakten Aufbau mit sehr geringer Bauhöhe.

Die kreisrunde Membran 28 sitzt in einer angepassten runden Ausnehmung einer Ventilschraube 23, die mittels eines Aussengewindes 34 derart in das Gewindesackloch 35 des Ventilgehäuses 22 einschraubbar ist, dass die Membran 28 auf dem Ventilsitz 29 zu liegen kommt und zugleich die erste Ringnut 26 überdeckt. Unterhalb der Membran 28 ist in der Ventilschraube 23 ein im Durchmesser abgestuftes Sackloch eingebracht, welches durch die Membran 28 abgeschlossen wird und einen Federraum 30 bildet, in welchem eine spiralförmige Druckfeder 32 untergebracht ist. Die Druckfeder 32 drückt in axialer Richtung einen pilzförmigen Druckbolzen 31 gegen die Unterseite der Membran 28, so dass die Membran 28 bei Normaldruck in der Einlassbohrung 27 dichtend auf den Ventilsitz 29 gedrückt wird. Der Ventilsitz 29 steht dabei vorzugsweise wenige 1/10 mm aus der Bodenfläche des Gewindesackloches 35 hervor, damit eine sichere Abdichtung bei geschlossenem Ventil erzielt wird.

Seitlich neben der Membran 28 ist in der Ventilschraube 23 wenigstens eine in axialer Richtung verlaufende Auslassbohrung 33 untergebracht, die am einen Ende mit der zweiten Ringnut 25 in Verbindung steht und am anderen Ende ins Freie mündet. Die zweite Ringnut 25 stellt sicher, dass unabhängig von der Endstellung der eingedrehten Ventilschraube 23 die Auslassbohrung 33 stets über die Verbindungsnut 36 mit der ersten Ringnut in Verbindung steht.

Sobald der Oeldruck in der Einlassbohrung 27 einen durch die Wahl der Druckfeder 32 bestimmten Oeffnungsdruck von z.B. 6,5 - 12 bar erreicht, hebt die Membran 28 selbsttätig gegen den Druck der Druckfeder 32 vom Ventilsitz 29 ab, so dass das Oel von der Einlassbohrung 27 aus zwischen Ventilsitz 29 und Membran 28 hindurch in die erste Ringnut 26, von dort über die Verbindungsnut 36 in die zweite Ringnut 25, und von dort über die Auslassbohrung 33 zum Ausgang des Ventils strömen kann. Der Oeffnungsweg der Membran 28 bzw. der Hub des Druckbolzens 31 beträgt beim Oeffnen des Ventils nur etwa 5/100 bis 1/10 mm, so dass im Federraum 30 nur wenig Spiel vorgesehen werden muss. Wie bereits eingangs beschrieben, führt die (selbsttätige) Oeffnung des Abschlussventils 5 dazu, dass sich die vom Oeldruck beaufschlagte Fläche der Membran 28 und damit die auf die Druckfeder 32 ausgeübte Gegenkraft vergrössert. Dies hat zur Folge, dass das Ventil erst bei einem deutlich geringeren Druck wieder schliesst, der etwa 1-2 bar unter dem Oeffnungsdruck liegt. Dies hat auch zur Folge, dass der Druckabfall im Abschlussventil 5 sehr gering ist, so dass die Leistung der den Oeldruck erzeugenden Oelpumpe entsprechend günstiger bemessen werden kann.

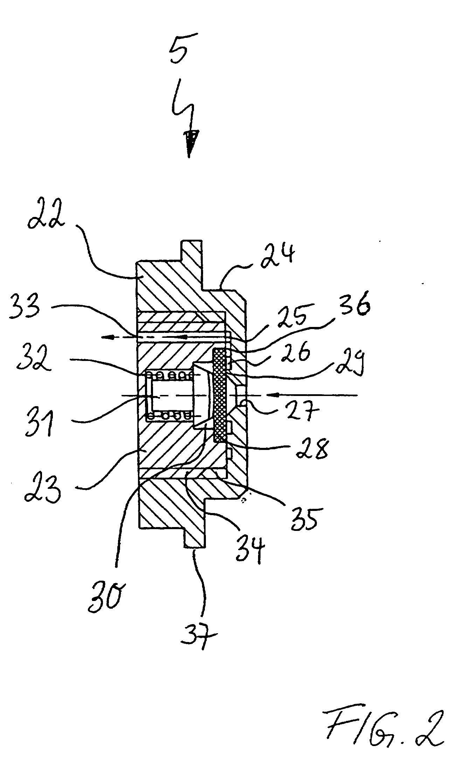

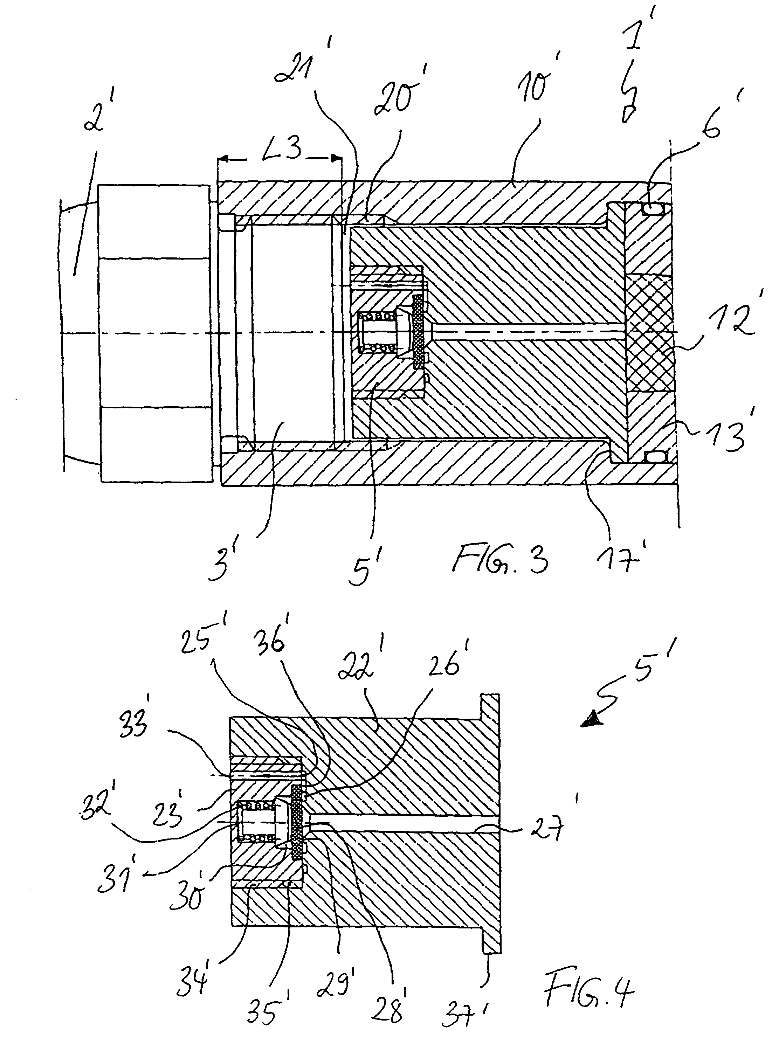

In dem bisher beschriebenen Beispiel wurde davon ausgegangen, dass in den Düsenstock ein Düseneinsatz mit den vollen Abmessungen gemäss der Euronorm EN 293 einbaubar sein sollte. Wird auf einen Düseneinsatz mit angesetztem Filter verzichtet, kann das Abschlussventil bei sonst gleichen Aussenabmessungen des Düsenstockes näher an die eigentliche Düse gebracht werden, um schädliche Räume zu verringern. Ein entsprechendes Ausführungsbeispiel für diesen Fall ist in den Fig. 3 und 4 in einer den Fig. 1 und 2 entsprechenden Darstellung wiedergegeben.

Beim Düsenstock 1' der Fig. 3 entsprechen das Rohr 10' mit dem Absatz 17', die Heizung 13', der Wärmetauscher 12' und das Innengewinde 20' weitgehend den mit den ungestrichenen Bezugszeichen bezeichneten äquivalenten Bauteilen aus Fig. 1, so dass in Fig. 3 nur der relevante Ausschnitt des Düsenstockes 1' gezeigt ist. Heizung 13' und Wärmetauscher 12' bilden allerdings im Unterschied zu Fig. 1 zur Düse hin eine ebene Abschlussfläche ohne einen Absatz zur Einpassung des Abschlussventils 5'. Der Düsenraum 21' ist gegenüber dem Düsenraum 21 aus Fig. 1 auf die Länge L3 von etwa 7,5 mm verkürzt, was gerade zur Aufnahme einer Druckzerstäuberdüse 2' mit dem Aussengewinde 3' aber ohne Filter ausreicht.

Das Abschlussventil 5' gemäss Fig. 4 hat denselben funktionellen Aufbau und im eigentlichen Ventilteil dieselben Abmessungen und Parameter wie das Abschlussventil 5 aus Fig. 2. Das Abschlussventil 5' ist gleichfalls ausgestattet mit einem Ventilgehäuse 22' mit Gewindesackloch 35' und umlaufender Schulter 37', einer Ventilschraube 23' mit Aussengewinde 34', einer Einlassbohrung 27', einer Auslassbohrung 33', einer Membran 28', Ringnuten 25' und 26', welche durch eine Verbindungsnut 36' verbunden sind, einem Ventilsitz 29', einem pilzförmigen Druckbolzen 31', und einer spiralförmigen Druckfeder 32'. Das Ventilgehäuse 22' mit der Einlassbohrung 27' ist gegenüber dem Abschlussventil 5 aus Fig. 2 jedoch soweit verlängert, dass der eigentliche Ventilteil mit der Membran 28' so nah wie möglich an der eingeschraubte Druckzerstäuberdüse 2' sitzt. Hierdurch wird der schädliche Raum zwischen dem Abschlussventil 5' und der Druckzerstäuberdüse 2' auf ein Minimum reduziert.

Es ist im übrigen denkbar, die düsenseitige Stirnfläche von Heizung 13' und Wärmetauscher 12' und das Ventilgehäuse 22' ebenso mit einem Absatz zu versehen wie dies in Fig. 1 bei der Heizung 13 und dem Wärmetauscher 12 und dem Ventilgehäuse 22 der Fall ist. Es können dann innerhalb desselben Düsenstockes wahlweise Abschlussventile 5 oder 5' eingesetzt werden, je nachdem, wieviel Platz für die Druckzerstäuberdüse 2 bzw. 2' benötigt wird.

Insgesamt ergibt sich mit der Erfindung ein Düsenstock mit integriertem Abschlussventil, der bei geringer Baulänge den Einbau genormter Druckzerstäuberdüsen ermöglicht, einfach und kompakt aufgebaut ist, leicht zu montieren und zu warten ist, und keinen zusätzlichen externen Steuerungsaufwand erfordert.

### BEZEICHNUNGSLISTE

- 1,1': Düsenstock
- 2,2': Druckzerstäuberdüse
- 3,3': Aussengewinde
- 4: Filter
- 5,5': Abschlussventil
- 6,6',15: O-Ring
- 7: Temperaturfühler
- 8: Zuleitung
- 9: Heizwicklung
- 10, 10': Rohr (zylindrisch)
- 11: Ringspalt
- 12,12': Wärmetauscher
- 13 ,13 ': Heizung
- 14: Durchgangsbohrung
- 16: Anschlussteil
- 17,17': Absatz
- 18: Gewindebohrung
- 19: Anschlusskasten
- 20,20': Innengewinde
- 21,21': Düsenraum
- 22,22': Ventilgehäuse
- 23,23': Ventilschraube
- 24: Absatz
- 25,25': Ringnut
- 26,26': Ringnut
- 27,27': Einlassbohrung
- 28,28': Membran
- 29,29': Ventilsitz
- 30,30': Federraum
- 31,31': Druckbolzen
- 32,32': Druckfeder
- 33,33': Auslassbohrung
- 34,34': Aussengewinde
- 35, 35': Gewindesackloch
- 36,36': Verbindungsnut
- 37,37': Schulter (umlaufend)
- L1,L2,L3: Länge

## Patentansprüche

1. Düsenstock (1,1') für einen Öldruckzerstäubungsbrenner mit folgenden Merkmalen:
a) der Düsenstock (1,1') weist an seinem einen Ende einen Düsenraum (21,21') zur Aufnahme einer Druckzerstäuberdüse (2,2') und an seinem anderen Ende ein Anschlußteil (16) zum Anschluß einer Ölzuführungsleitung auf,
b) der Düsenstock (1,1') umfaßt ein zwischen dem Anschlußteil (16) und dem Düsenraum (21) angeordnetes Abschlußventil (5,5') zum Unterbrechen des Ölflusses bei nicht gezündetem Brenner, wobei das Abschlußventil (5, 5'), der Düsenstock (1, 1') sowie die Druckzerstäuberdüse (2, 2') modular voneinander getrennt sind,
c) das Abschlußventil (5,5') ist als selbsttätig arbeitendes Ventil ausgebildet,
d) das Abschlußventil (5,5') ist ein mechanisch arbeitendes Ventil,
e) das Abschlußventil (5,5') weist ein rotationssymmetrisches, zylindrisches Ventilgehäuse (22,22') auf,
f) ein in Strömungsrichtung des Ölflusses vom liegender Abschnitt des Ventilgehäuses (22, 22') bildet einen Ventilsitz (29, 29'),
g) das Abschlußventil (5,5') umfaßt einen als elastische Membran (28, 28') ausgebildeten Ventilteller,
h) das Ventilgehäuse (22,22') ist mit einer Ventilschraube (23,23') derart verschraubt, daß die Membran (28,28') auf dem Ventilsitz (29,29') zur Anlage kommt,
i) die Ventilschraube (29, 29') ist hülsenartig ausgebildet und nimmt die einzige Druckfeder (32, 32') des Abschlußventils (5, 5') auf, wobei die einzige vorgespannte Druckfeder (32, 32') die elastische Membran (28, 28') dichtend gegen den vom Ventilgehäuse (22, 22') gebildeten Ventilsitz (29, 29') drückt,
j) das Abschlußventil (5, 5') ist über das Ventilgehäuse (22, 22') im Düsenstock (1, 1') positioniert,
k) bei geschlossenem Abschlußventil (5,5') drückt die Druckfeder (32,32') die Membran (28,28') dichtend gegen den Ventilsitz (29,29'), wobei die elastische Membran (28,28') selbsttätig gegen den Druck der Druckfeder (32,32') vom Ventilsitz (29,29') abhebt, sobald der Öldruck einen durch die Druckfeder (32,32') definierten Öffnungsdruck erreicht.

2. Düsenstock nach Anspruch 1, **dadurch gekennzeichnet,** daß
a) in der Ventilschraube (23,23') ein Sackloch eingebracht ist, welches einen einseitig offenen Federraum (30,30') bildet,
b) in dem Sackloch die Druckfeder (32,32') angeordnet ist,
c) die Membran (28,28') das Sackloch verschließt.

3. Düsenstock nach Anspruch 1, **dadurch gekennzeichnet,** daß die Druckfeder (32,32') als Spiralfeder ausgebildet ist.

4. Düsenstock nach Anspruch 1, **dadurch gekennzeichnet,** daß der Ventilsitz (29,29') auf der Dichtungsseite der Membran (28,28') konzentrisch eine zentrale Einlaßbohrung (27,27') umschließt, welche beim Aufliegen der Membran (28,28') auf dem Ventilsitz (29,29') verschlossen ist, daß der Ventilsitz (29,29') auf der Dichtungsseite der Membran (28,28') konzentrisch von einer ersten von der Membran (28,28') überdeckten Ringnut (26,26') umgeben ist, in welche das Öl aus der Einlaßbohrung (27,27') fließt, wenn die Membran (28,28') von dem Ventilsitz (29,29') abhebt, und daß seitlich neben der Membran (28,28') wenigstens eine in axialer Richtung verlaufende Auslaßbohrung (33,33') vorgesehen ist, welche mit der ersten Ringnut (26,26') in Verbindung steht und das Öl aus der ersten Ringnut (26,26') zum Ausgang des Abschlußventils (5,5') leitet.

5. Düsenstock nach Anspruch 4, **dadurch gekennzeichnet,** daß die Einlaßbohrung (27,27'), der Ventilsitz (29,29') und die erste Ringnut (26,26') im Boden eines Gewindesackloches (35,35') in dem Ventilgehäuse (22,22') angeordnet sind, daß die Membran (28,28') auf der Frontseite der Ventilschraube (23,23') angeordnet ist, welche mit einem Außengewinde (34,34') in das Gewindesackloch (35,35') einschraubbar ist, daß in der Ventilschraube (23,23') der Federraum (30,30') eingelassen ist, welcher von der Membran (28,28') verschlossen wird und in welchem die Druckfeder (32,32') untergebracht ist, und daß zwischen der Druckfeder (32,32') und der Membran (28,28') ein Druckbolzen (31, 31') vorgesehen ist, welcher von der Druckfeder (32,32') beaufschlagt wird und die Membran (28,28') gegen den Ventilsitz (29,29') drückt.

6. Düsenstock nach Anspruch 5, **dadurch gekennzeichnet,** daß die Auslaßbohrung (33,33') in der Ventilschraube (23,23') verläuft, und daß die Auslaßbohrung (33,33') bei eingeschraubter Ventilschraube (23,23') mit einer zweiten Ringnut (25,25') in Verbindung steht, welche auf der Dichtungsseite der Membran (28,28') die erste Ringnut (26,26') konzentrisch umgibt und mit dieser durch wenigstens eine Verbindungsnut (36,36') verbunden ist.

7. Abschlußventil (5,5') für einen Düsenstock (1, 1') mit folgenden Merkmalen:
a) das Abschlußventil (5,5') ist als selbsttätig arbeitendes Ventil ausgebildet,
b) das Abschlußventil (5,5') ist ein mechanisch arbeitendes Ventil,
c) das Abschlußventil (5, 5') weist ein rotationssymmetrisches, zylindrisches Ventilgehäuse (22, 22') auf,
d) ein in Strömungsrichtung eines Ölflusses vom liegender Abschnitt des Ventilgehäuses (22, 22') bildet einen Ventilsitz (29, 29'),
e) das Abschlußventil (5,5') umfaßt einen als elastische Membran (28, 28') ausgebildeten Ventilteller,
f) das Ventilgehäuse (22, 22') ist mit einer Ventilschraube (23, 23') derart verschraubt, daß die Membran (28, 28') auf dem Ventilsitz (29, 29') zur Anlage kommt,
g) die Ventilschraube (29, 29') ist hülsenartig ausgebildet und nimmt die einzige Druckfeder (32, 32') des Abschlußventils (5, 5') auf, wobei die einzige vorgespannte Druckfeder (32, 32') die elastische Membran (28, 28') dichtend gegen den vom Ventilgehäuse (22, 22') gebildeten Ventilsitz (29, 29') drückt,
h) das Abschlußventil (5, 5') ist über das Ventilgehäuse (22, 22') im Düsenstock (1, 1') positionierbar,
i) bei geschlossenem Abschlußventil (5, 5') drückt die Druckfeder (32, 32') die Membran (28, 28') dichtend gegen den Ventilsitz (29, 29'), wobei die elastische Membran (28, 28') selbsttätig gegen den Druck der Druckfeder (32, 32') vom Ventilsitz (29, 29') abhebt, sobald ein durch die Druckfeder (32, 32') definierter Öffnungsdruck erreicht wird.

8. Abschlußventil nach Anspruch 7, **dadurch gekennzeichnet,** daß
a) in der Ventilschraube (23,23') ein Sackloch eingebracht ist, welches einen einseitig offenen Federraum (30,30') bildet,
b) in dem Sackloch die Druckfeder (32,32') angeordnet ist,
c) die Membran (28,28') das Sackloch verschließt.

9. Abschlußventil nach Anspruch 7, **dadurch gekennzeichnet,** daß der Ventilsitz (29,29') auf der Dichtungsseite der Membran (28,28') konzentrisch eine zentrale Einlaßbohrung (27,27') umschließt, welche beim Aufliegen der Membran (28,28') auf dem Ventilsitz (29,29') verschlossen ist, daß der Ventilsitz (29,29') auf der Dichtungsseite der Membran (28,28') konzentrisch von einer ersten Ringnut (26,26') umgeben ist, in welche das Öl aus der Einlaßbohrung (27,27') fließt, wenn die Membran (28,28') von dem Ventilsitz (29,29') abhebt, und daß seitlich neben der Membran (28,28') wenigstens eine in axialer Richtung verlaufende Auslaßbohrung (33,33') vorgesehen ist, welche mit der ersten Ringnut (26,26') in Verbindung steht und das Öl aus der ersten Ringnut (26,26') zum Ausgang des Abschlußventils (5,5') leitet.

10. Abschlußventil nach Anspruch 7, **dadurch gekennzeichnet,** daß die Einlaßbohrung (27,27'), der Ventilsitz (29,29') und die erste Ringnut (26,26') im Boden eines Gewindesackloches (35,35') in dem Ventilgehäuse (22,22') angeordnet sind, daß die Membran (28,28') auf der Frontseite der Ventilschraube (23,23') angeordnet ist, welche mit einem Außengewinde (34,34') in das Gewindesackloch (35,35') einschraubbar ist, daß in der Ventilschraube (23,23') der Federraum (30,30') eingelassen ist, welcher von der Membran (28,28') verschlossen wird und in welchem die Druckfeder (32,32') untergebracht ist, daß zwischen der Druckfeder (32,32') und der Membran (28,28') ein Druckbolzen (31,31') vorgesehen ist, welcher von der Druckfeder (32,32') beaufschlagt wird und die Membran (28,28') gegen den Ventilsitz (29,29') drückt, daß die Auslaßbohrung (33,33') in der Ventilschraube (23,23') verläuft, und daß dieAuslaßbohrung (33,33') bei eingeschraubter Ventilschraube (23,23') mit einer zweiten Ringnut (25,25') in Verbindung steht, welche auf der Dichtungsseite der Membran (28,28') die erste Ringnut (26,26') konzentrisch umgibt und mit dieser durch wenigstens eine Verbindungsnut (36,36') verbunden ist.

## Claims

1. Nozzle assembly (1, 1') for an oil-pressure atomizing burner having the following features:
a) the nozzle assembly (1, 1') has, at one end, a nozzle space (21, 21') for receiving a pressure atomizer nozzle (2, 2') and, at its other end, a connection part (16) for connecting an oil supply line,
b) the nozzle assembly (1, 1') comprises a shut-off valve (5, 5'), arranged between the connection part (16) and the nozzle space (21), for interrupting the oil flow when the burner is not ignited, the shut-off valve (5, 5'), the nozzle assembly (1, 1') and the pressure atomizer nozzle (2, 2') being separated from one another in a modular manner,
c) the shut-off valve (5, 5') is designed as an automatically operating valve,
d) the shut-off valve (5, 5') is a mechanically operating valve,
e) the shut-off valve (5, 5') has a rotationally symmetrical cylindrical valve housing (22, 22'),
f) a portion of the valve housing (22, 22') which is located at the front in the direction of flow of the oil flow forms a valve seat (29, 29'),
g) the shut-off valve (5, 5') comprises a valve disc designed as an elastic diaphragm (28, 28'),
h) the valve housing (22, 22') is screwed by means of a valve screw (23, 23') in such a way that the diaphragm (28, 28') comes to bear on the valve seat (29, 29'),
i) the valve screw (29, 29') has a sleeve-like design and receives the single compression spring (32, 32') of the shut-off valve (5, 5'), the single prestressed compression spring (32, 32') pressing the elastic diaphragm (28, 28') sealingly against the valve seat (29, 29') formed by the valve housing (22, 22').
j) the shut-off valve (5, 5') is positioned in the nozzle assembly (1, 1') via the valve housing (22, 22'),
k) with the shut-off valve (5, 5') closed, the compression spring (32, 32') presses the diaphragm (28, 28') sealingly against the valve seat (29, 29'), the elastic diaphragm (28, 28') automatically lifting off from the valve seat (29, 29') counter to the pressure of the compression spring (32, 32'), as soon as the oil pressure reaches an opening pressure defined by the compression spring (32, 32').

2. Nozzle assembly according to Claim 1, characterized in that
a) a blind hole, which forms a spring space (30, 30') open on one side, is introduced in the valve screw (23, 23'),
b) the compression spring (32, 32') is arranged in the blind hole,
c) the diaphragm (28, 28') closes the blind hole.

3. Nozzle assembly according to Claim 1, characterized in that the compression spring (32, 32') is designed as a helical spring.

4. Nozzle assembly according to Claim 1, characterized in that the valve seat (29, 29') concentrically surrounds, on the sealing side of the diaphragm (28, 28'), a central inlet bore (27, 27') which is closed when the diaphragm (28, 28') comes to rest on the valve seat (29, 29'), in that the valve seat (29, 29') is concentrically surrounded, on the sealing side of the diaphragm (28, 28'), by a first annular groove (26, 26') which is covered by the diaphragm (28, 28') and into which the oil flows from the inlet bore (27, 27') when the diaphragm (28, 28') lifts off from the valve seat (29, 29'), and in that laterally next to the diaphragm (28, 28') is provided at least one outlet bore (33, 33') which runs in the axial direction and which is connected to the first annular groove (26, 26') and guides the oil out of the first annular groove (26, 26') to the exit of the shut-off valve (5, 5').

5. Nozzle assembly according to Claim 4, characterized in that the inlet bore (27, 27'), the valve seat (29, 29') and the first annular groove (26, 26') are arranged in the bottom of a threaded blind hole (35, 35') in the valve housing (22, 22'), in that the diaphragm (28, 28') is arranged on the front side of the valve screw (23, 23') which can be screwed by means of an external thread (34, 34') into the threaded blind hole (35, 35'), in that the valve screw (23, 23') has countersunk into it the spring space (30, 30') which is closed by the diaphragm (28, 28') and in which the compression spring (32, 32') is accommodated, and in that between the compression spring (32, 32') and the diaphragm (28, 28') is provided a thrust bolt (31, 31') which is acted upon by a compression spring (32, 32') and presses the diaphragm (28, 28') against the valve seat (29, 29').

6. Nozzle assembly according to Claim 5, characterized in that the outlet bore (33, 33') runs in the valve screw (23, 23'), and in that, with the valve screw (23, 23') screwed in, the outlet bore (33, 33') is connected to a second annular groove (25, 25') which concentrically surrounds, on the sealing side of the diaphragm (28, 28'), the first annular groove (26, 26') and which is connected to the latter by means of at least one connecting groove (36, 36').

7. Shut-off valve (5, 5') for a nozzle assembly (1, 1') having the following features:
a) the shut-off valve (5, 5') is designed as an automatically operating valve,
b) the shut-off valve (5, 5') is a mechanically operating valve,
c) the shut-off valve (5, 5') has a rotationally symmetrical cylindrical valve housing (22, 22'),
d) a portion of the valve housing (22, 22') which is located at the front in the direction of flow of an oil flow forms a valve seat (29, 29'),
e) the shut-off valve (5, 5') comprises a valve disc designed as an elastic diaphragm (28, 28'),
f) the valve housing (22, 22') is screwed by means of a valve screw (23, 23') in such a way that the diaphragm (28, 28') comes to bear on the valve seat (29, 29'),
g) the valve screw (29, 29') has a sleeve-like design and receives the single compression spring (32, 32') of the shut-off valve (5, 5'), the single prestressed compression spring (32, 32') pressing the elastic diaphragm (28, 28') sealingly against the valve seat (29, 29') formed by the valve housing (22, 22'),
h) the shut-off valve (5, 5') can be positioned in the nozzle assembly (1, 1') via the valve housing (22, 22'),
i) with the shut-off valve (5, 5') closed, the compression spring (32, 32') presses the diaphragm (28 28') sealingly against the valve seat (29, 29'), the elastic diaphragm (28, 28') automatically lifting off from the valve seat (29, 29') counter to the pressure of the compression spring (32, 32'), as soon as an opening pressure defined by the compression spring (32, 32') is reached.

8. Shut-off valve according to Claim 7, characterized in that
a) a blind hole, which forms a spring space (30, 30') open on one side, is introduced in the valve screw (23 23'),
b) the compression spring (32, 32') is arranged in the blind hole,
c) the diaphragm (28, 28') closes the blind hole.

9. Shut-off valve according to Claim 7, characterized in that the valve seat (29, 29') concentrically surrounds, on the sealing side of the diaphragm (28, 28'), a central inlet bore (27, 27') which is closed when the diaphragm (28, 28') comes to rest on the valve seat (29, 29'), in that the valve seat (29, 29') is concentrically surrounded, on the sealing side of the diaphragm (28, 28'), by a first annular groove (26, 26'), into which the oil flows from the inlet bore (27, 27') when the diaphragm (28, 28') lifts off from the valve seat (29, 29'), and in that laterally next to the diaphragm (28, 28') is provided at least one outlet bore (33, 33') which runs in the axial direction and which is connected to the first annular groove (26, 26') and guides the oil out of the first annular groove (26, 26') to the exit of the shut-off valve (5, 5').

10. Shut-off valve according to Claim 7, characterized in that the inlet bore (27, 27'), the valve seat (29, 29') and the first annular groove (26, 26') are arranged in the bottom of a threaded blind hole (35, 35') in the valve housing (22, 22'), in that the diaphragm (28, 28') is arranged on the front side of the valve screw (23, 23') which can be screwed by means of an external thread (34, 34') into the threaded blind hole (35, 35'), in that the valve screw (23, 23') has countersunk into it the spring space (30, 30') which is closed by the diaphragm (28, 28') and in which the compression spring (32, 32') is accommodated, in that between the compression spring (32, 32') and the diaphragm (28, 28') is provided a thrust bolt (31, 31') which is acted upon by the compression spring (32, 32') and presses the diaphragm (28, 28') against the valve seat (29, 29'), in that the outlet bore (33, 33') runs in the valve screw (23, 23'), and in that, with the valve screw (23, 23') screwed in, the outlet bore (33, 33') is connected to a second annular groove (25, 25') which concentrically surrounds, on the sealing side of the diaphragm (28, 28'), the first annular groove (26, 26') and is connected to the latter by means of at least one connecting groove (36, 36').

## Revendications

1. Raccord de buse (1, 1') pour un brûleur à pulvérisation sous pression de fuel, ayant les caractéristiques suivantes :
a) le raccord de buse (1, 1') présente, à l'une de ses extrémités, un espace de buse (21, 21') pour recevoir une buse de pulvérisation sous pression (2, 2') et à son autre extrémité une partie de raccordement (16) pour le raccordement d'une conduite d'alimentation en fuel,
b) le raccord de buse (1, 1') comprend une vanne d'arrêt (5, 5') disposée entre la partie de raccordement (16) et l'espace de buse (21) pour interrompre l'écoulement de fuel lorsque le brûleur n'est pas allumé, la vanne d'arrêt (5, 5'), le raccord de buse (1, 1') ainsi que la buse de pulvérisation sous pression (2, 2') étant séparés les uns des autres de façon modulaire,
c) la vanne d'arrêt (5, 5') est configurée en tant que soupape à fonctionnement autonome,
d) la vanne d'arrêt (5, 5') est une soupape à fonctionnement mécanique,
e) la vanne d'arrêt (5, 5') présente un boîtier de soupape (22, 22') cylindrique, à symétrie de révolution,
f) une portion du boîtier de soupape (22, 22') se trouvant en avant dans la direction d'écoulement du fuel forme un siège de soupape (29, 29'),
g) la vanne d'arrêt (5, 5') comprend une tête de soupape formée en tant que membrane élastique (28, 28'),
h) le boîtier de soupape (22, 22') est vissé avec une vis de soupape (23, 23') de telle sorte que la membrane (28, 28') vienne en appui contre le siège de soupape (29, 29'),
i) la vis de soupape (29, 29') est conçue en forme de douille et reçoit l'unique ressort de pression (32, 32') de la vanne d'arrêt (5, 5'), l'unique ressort de pression précontraint (32, 32') pressant de manière hermétique la membrane élastique (28, 28') contre le siège de soupape (29, 29') formé par le boîtier de soupape (22, 22'),
j) la vanne d'arrêt (5, 5') est positionnée par-dessus le boîtier de soupape (22, 22') dans le raccord de buse (1, 1'),
k) lorsque la vanne d'arrêt (5, 5') est fermée, le ressort de pression (32, 32') presse la membrane (28, 28') de manière hermétique contre le siège de soupape (29, 29'), la membrane élastique (28, 28') se soulevant automatiquement du siège de soupape (29, 29') contre la pression du ressort de pression (32, 32'), dès que la pression de fuel atteint une pression d'ouverture définie par le ressort de pression (32, 32').

2. Raccord de buse selon la revendication 1,
**caractérisé en ce que**
a) un trou borgne est pratiqué dans la vis de soupape (23, 23'), lequel forme un espace de ressort ouvert d'un côté (30, 30'),
b) le ressort de pression (32, 32') est disposé dans le trou borgne,
c) la membrane (28, 28') ferme le trou borgne.

3. Raccord de buse selon la revendication 1,
**caractérisé en ce que** le ressort de pression (32, 32') est formé en tant que ressort spiral.

4. Raccord de buse selon la revendication 1,
**caractérisé en ce que,** sur le côté d'étanchéité de la membrane (28, 28'), le siège de soupape (29, 29') entoure un alésage d'entrée central (27, 27') de manière concentrique, ce dernier étant fermé lors de l'application de la membrane (28, 28') sur le siège de soupape (29, 29'), en ce que, sur le côté d'étanchéité de la membrane (28, 28'), le siège de soupape (29, 29') est entouré de manière concentrique par une première rainure annulaire (26, 26') recouverte par la membrane (28, 28'), dans laquelle rainure le fuel s'écoule depuis l'alésage d'entrée (27, 27') lorsque la membrane (28, 28') se soulève du siège de soupape (29, 29'), et en ce que, latéralement à côté de la membrane (28, 28'), au moins un alésage de sortie (33, 33') s'étendant dans la direction axiale est prévu, lequel est en communication avec la première rainure annulaire (26, 26') et conduit le fuel de la première rainure annulaire (26, 26') jusqu'à la sortie de la vanne d'arrêt (5, 5').

5. Raccord de buse selon la revendication 4,
**caractérisé en ce que** l'alésage d'entrée (27, 27'), le siège de soupape (29, 29') et la première rainure annulaire (26, 26') sont disposés dans le fond d'un trou borgne fileté (35, 35') dans le boîtier de la soupape (22, 22'), en ce que la membrane (28, 28') est disposée sur la partie avant de la vis de soupape (23, 23') qui peut être vissée avec un filetage externe (34, 34') dans le trou borgne fileté (35, 35'), en ce que l'espace de ressort (30, 30') est prévu dans la vis de soupape (23, 23'), cet espace étant fermé par la membrane (28, 28') et le ressort de pression (32, 32') y étant introduit, et en ce qu'entre le ressort de pression (32, 32') et la membrane (28, 28') un boulon de pression (31, 31') est prévu, lequel est sollicité par le ressort de pression (32, 32') et presse la membrane (28, 28') contre le siège de soupape (29, 29') .

6. Raccord de buse selon la revendication 5,
**caractérisé en ce que** l'alésage de sortie (33, 33') s'étend dans la vis de soupape (23, 23'), et en ce que, lorsque la vis de soupape (23, 23') est vissée, l'alésage de sortie (33, 33') est en communication avec une deuxième rainure annulaire (25, 25') qui entoure la première rainure annulaire (26, 26') de manière concentrique du côté d'étanchéité de la membrane (28, 28') et est connectée à celle-ci par au moins une rainure de connexion (36, 36').

7. Vanne d'arrêt (5, 5') pour un raccord de buse (1, 1') ayant les caractéristiques suivantes :
a) la vanne d'arrêt (5, 5') est configurée en tant que soupape à fonctionnement autonome,
b) la vanne d'arrêt (5, 5') est une soupape à fonctionnement mécanique,
c) la vanne d'arrêt (5, 5') présente un boîtier de soupape (22, 22') cylindrique, à symétrie de révolution,
d) une portion du boîtier de soupape (22, 22') se trouvant en avant dans la direction d'écoulement du fuel forme un siège de soupape (29, 29'),
e) la vanne d'arrêt (5, 5') comprend une tête de soupape formée en tant que membrane élastique (28, 28'),
f) le boîtier de soupape (22, 22') est vissé avec une vis de soupape (23, 23') de telle sorte que la membrane (28, 28') vienne en appui contre le siège de soupape (29, 29'),
g) la vis de soupape (29, 29') est conçue en forme de douille et reçoit l'unique ressort de pression (32, 32') de la vanne d'arrêt (5, 5'), l'unique ressort de pression précontraint (32, 32') pressant de manière hermétique la membrane élastique (28, 28') contre le siège de soupape (29, 29') formé par le boîtier de soupape (22, 22'),
h) la vanne d'arrêt (5, 5') peut être positionnée par-dessus le boîtier de soupape (22, 22') dans le raccord de buse (1, 1'),
i) lorsque la vanne d'arrêt (5, 5') est fermée, le ressort de pression (32, 32') presse la membrane (28, 28') de manière hermétique contre le siège de soupape (29, 29'), la membrane élastique (28, 28') se soulevant automatiquement du siège de soupape (29, 29') contre la pression du ressort de pression (32, 32'), dès qu'une pression d'ouverture définie par le ressort de pression (32, 32') est atteinte.

8. Vanne d'arrêt selon la revendication 7,
**caractérisée en ce que**
a) un trou borgne est pratiqué dans la vis de soupape (23, 23'), lequel forme un espace de ressort ouvert d'un côté (30, 30'),
b) le ressort de pression (32, 32') est disposé dans le trou borgne,
c) la membrane (28, 28') ferme le trou borgne.

9. Vanne d'arrêt selon la revendication 7,
**caractérisée en ce que,** sur le côté d'étanchéité de la membrane (28, 28'), le siège de soupape (29, 29') entoure un alésage d'entrée central (27, 27') de manière concentrique, ce dernier étant fermé lors de l'application de la membrane (28, 28') sur le siège de soupape (29, 29'), en ce que, sur le côté d'étanchéité de la membrane (28, 28'), le siège de soupape (29, 29') est entouré de manière concentrique par une première rainure annulaire (26, 26'), dans laquelle rainure le fuel s'écoule depuis l'alésage d'entrée (27, 27') lorsque la membrane (28, 28') se soulève du siège de soupape (29, 29'), et en ce que, latéralement à côté de la membrane (28, 28'), au moins un alésage de sortie (33, 33') s'étendant dans la direction axiale est prévu, lequel est en communication avec la première rainure annulaire (26, 26') et conduit le fuel de la première rainure annulaire (26, 26') jusqu'à la sortie de la vanne d'arrêt (5, 5').

10. Vanne d'arrêt selon la revendication 7,
**caractérisée en ce que** l'alésage d'entrée (27, 27'), le siège de soupape (29, 29') et la première rainure annulaire (26, 26') sont disposés dans le fond d'un trou borgne fileté (35, 35') dans le boîtier de la soupape (22, 22'), en ce que la membrane (28, 28') est disposée sur la partie avant de la vis de soupape (23, 23') qui peut être vissée avec un filetage externe (34, 34') dans le trou borgne fileté (35, 35'), en ce que l'espace de ressort (30, 30') est prévu dans la vis de soupape (23, 23'), cet espace étant fermé par la membrane (28, 28') et le ressort de pression (32, 32') y étant introduit, et en ce qu'entre le ressort de pression (32, 32') et la membrane (28, 28') un boulon de pression (31, 31') est prévu, lequel est sollicité par le ressort de pression (32, 32') et presse la membrane (28, 28') contre le siège de soupape (29, 29'), en ce que l'alésage de sortie (33, 33') s'étend dans la vis de soupape (23, 23'), et en ce que, lorsque la vis de soupape (23, 23') est vissée, l'alésage de sortie (33, 33') est en communication avec une deuxième rainure annulaire (25, 25') qui entoure la première rainure annulaire (26, 26') de manière concentrique du côté d'étanchéité de la membrane (28, 28') et est connectée à celle-ci par au moins une rainure de connexion (36, 36').
